(19) Europäisches Patentamt
European Patent Office
Office européen des brevets

(11) Publication number: 0 070 712 B1

(12) # EUROPEAN PATENT SPECIFICATION

(45) Date of publication of patent specification: 04.06.86

(21) Application number: 82303754.4

(22) Date of filing: 16.07.82

(51) Int. Cl.[4]: C 01 B 3/04, C 01 B 17/20, C 01 B 3/26, B 01 J 19/00, C 07 C 1/12, B 01 J 21/00, B 01 J 27/00

(54) **Catalysts for photo-assisted oxidation-reduction reactions.**

(30) Priority: 20.07.81 IT 2302981

(43) Date of publication of application:
26.01.83 Bulletin 83/04

(45) Publication of the grant of the patent:
04.06.86 Bulletin 86/23

(84) Designated Contracting States:
DE FR GB

(56) References cited:
EP-A-0 043 251

JOURNAL OF THE AMERICAN CHEMICAL SOCIETY, vol. 104, no. 11, 2nd June 1982, pages 2996-3002, Gaston, Pa. (USA); E. BORGARELLO et al.: "Visible light induced water cleavage in colloidal solutions of chromium-doped titanium dioxide particles"

ANGEWANDTE CHEMIE INTERNATIONAL EDITION, vol. 19, no. 8, 19th July 1980, Verlag Chemie, pages 646-648, Weinheim (DE); J. KIWI et al.: "Cyclic water cleavage by visible light: Drastic improvement of yield of H2 and O2 with bifunctional redox catalysts"

NATURE, vol. 289, no. 5794, 15th January 1981, pages 158-160, Chesham, Bucks, (GB); E. BORGARELLO et al.: "Photochemical cleavage of water photocatalysis"

(73) Proprietor: SIBIT S.p.A.
31, Foro Buonaparte
Milan (IT)

(72) Inventor: Visca, Mario
52, Spalto Marengo
I-15100 Allessandria (IT)
Inventor: Scotti, Carlo
38, Via Piemonte
Voghere (Pavia) (IT)

(74) Representative: Whalley, Kevin et al
Marks & Clerk 57/60 Lincoln's Inn Fields
London WC2A 3LS (GB)

(56) References cited:
JOURNAL OF THE AMERICAN CHEMICAL SOCIETY, vol. 103, no. 16, 12th August 1982, pages 4685-4690, Gaston, Pa., (USA); D. DUONGHONG et al.: "Dynamics of light-induced water cleavage in colloidal systems"

HELVETICA CHIMICA ACTA, vol. 64, Section 1, no. 35, 4th February 1981, pages 362-366, Verlag Helvetica Chimica Acta, Basel (CH); KUPPUSWAMY KALYANASUNDARAM et al.: "Visible light induced water cleavage in CdS dispersions loaded with Pt and RuO2, hole scavenging RuO2"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 070 712 B1

Courier Press, Leamington Spa, England.

(56) References cited:
CHEMICAL ABSTRACTS, vol. 96, no. 4, January 1982, page 141, no. 22362d, Columbus Ohio (USA); T. KAWAI et al.: "Photocatalytic decomposition of water by solar energy - hydrogen evolution, carbon dioxide fixation on powdered semiconductors and their mechanisms with pulsed laser-dynamic mass technique"

**Description**

The present invention relates to catalysts for photo-assisted oxidation-reduction (redox) reactions, i.e. oxidation-reduction reactions capable of taking place by virtue of the energy provided by photons emitted by a light source, such as sunlight.

The photo-decomposition of water by means of solar energy is already known. It is based on the forming, in an aqueous solution, by radiation of visible light, of activated complexes of a redox system capable of reacting on suitable catalyst to give $H_2$ and $O_2$.

A reaction utilized to such purpose is based on the use, in the presence of colloidal Pt and $RuO_2$ catalysts, of a redox system comprising a ruthenium trisbipyridyl sensitizer and a methylviologen (N,N' - dimethyldipyridine) electronic relay. More particularly, the system operates as follows: the ruthenium trisbipyridyl in its reduced form $Ru(bipy)_3^{2+}$ reduces the methylviologen $MV^{2+}$ under the action of the visible light, as a result of which the following is obtained:

(1) the reduced $MV^+$, which reduces water to $H_2$ on the Pt catalyst, regenerating $MV^{2+}$;

(2) the oxidized $Ru(bipy)_3^{3+}$, which oxidizes water to $O_2$ on the $RuO_2$ catalyst, regenerating $Ru(bipy)_3^{2+}$.

The $H_2$ and $O_2$ yields obtained with this system are very low.

We are aware of European Patent Specification No. EP—A—0043251, which discloses a catalyst for the photodecomposition of water which comprises particles of $TiO_2$ doped with Nb, said particles containing on their surface $RuO_2$, and processed for the preparation of such a catalyst.

We are also aware of the disclosure in NATURE, Vol 289, No. 5794, 1981, page 158, which describes a catalyst for photo-assisted oxidation-reduction reactions, which comprises colloidal particles of a semi conductor such as $TiO_2$ doped with Nb.

The present invention aims to provide catalysts for the photo-decomposition of water and for other photo-assisted redox reactions, which ensure high reaction yields.

The invention also aims to permit the photo-assisted redox reactions to be effected in the absence of the redox system or in the presence of a simplified redox system.

The present invention provides two types of catalysts for photo-assisted oxidation reduction (redox) reactions selected from the photodecomposition of water, the photodecomposition of $H_2S$, the photo-reduction of $CO_2$ and the photo-decarboxylation of carboxylic acids, which fall within the same inventive concept. These catalysts not only promote the photo-decomposition of water, but make possible with the aid of light, the other said redox reactions, i.e.:

— the photodecomposition of $H_2S$ to $H_2$ and polysulphide ions;
— the photo-reduction of $CO_2$ to organic substances, such as methanol;
— the photo-decarboxylation of carboxylic acids, for example the decarboxylation of acetic acid to $CH_4$, $H_2$ and $CO_2$.

Both types of catalyst comprise colloidal particles of a semiconductor containing on their surface a reduction catalyst and an oxidation catalyst. In the first catalyst type, the semiconductor has an energy difference between the valence band and the conduction band such as to permit the hole-electron separation by absorption of visible light; furthermore, the conduction electron has such a reducing potential and the hole in the valence band has such oxidizing potential as to allow, in the presence of the aforesaid reduction and oxidation catalysts, the accomplishment of the redox reaction.

The semiconductors of the catalysts of the first type are selected, in the case of the photodecomposition of water, from $TiO_2$ doped with Mn, Cr or Cr and Nb; CdS doped with In or Ga; $SrTiO_3$ doped with Cr or Mn; gallium phosphide and cadmium sulphoselenide. In the case of the other said photodecomposition reactions, the semiconductors are selected from the above-mentioned compounds and CdS.

In the second catalyst type, the semiconductor has an energy difference between the valence band and the conduction band such as not to permit the hole electron separation by absorption of visible light; the semiconductor, however, has such a conduction band that, after having received one or more electrons from a sensitizer excited by absorption of visible light, such electron or electrons have such a reducing potential as to promote a reduction semi-reaction in the presence of the reduction catalyst, while the oxidized sensitizer (such sensitizer being oxidized in consequence of the yielding of the electron or electrons to the conduction band) promotes an oxidation semi-reaction in the presence of the oxidation catalyst.

The semiconductors of the catalyst of the second type are selected, in the case of the photodecomposition of water, from $SrTiO_3$ and $Nb_2O_5$; in the case of the other said photodecomposition reactions, the semiconductors are selected from the above-specified compounds and $TiO_2$ doped with Nb.

For the sake of brevity, the semiconductors and catalysts of the first type will be referred to as coloured semiconductors and catalysts since the absorption of visible light is generally evidenced by the colour of the catalysts, while the semiconductors and catalysts of the second type will be referred to as uncoloured semiconductors and catalysts since, due to the non-absorption of visible light, they appear white in a dispersed form.

The invention will be better understood on the basis of the following explanation.

In a semiconductor compound, the excitation of an electron from the valence band to the

conduction band leads to the forming of a hole-electron pair, corresponding to an electron vacancy in the valence band and to an excited electron in the conduction band. The energy required for the electronic excitation can be provided, for example, by absorption of a light quantum; as a function of the difference of energy between the two bands, the electron transfer to the conduction band occurs by absorption of visible or ultraviolet light. In the case of the uncoloured semiconductors utilized in the present invention, this energy can be supplied only by an ultra-violet photon.

The coloured semiconductors to be utilized in the present invention exhibit a lesser difference of energy between the bands, this difference being such as to permit the hole-electron separation by absorption of a photon of visible light. The hole-electron separation in the semiconductors brings the system to an excited energetic state; in particular the electron in the conduction band proves to have reducing characteristics, while the electronic vacancy in the valence band is oxidizing. The presence of a reduction catalyst and of an oxidation catalyst makes possible redox reactions with high yields. It is therefore apparent that the coloured catalysts promote redox reactions with the aid of visible light without requiring the presence of a redox system in an aqueous dispersion, i.e. without using a sensitizer and an electronic relay. Conversely, in the case of the uncoloured catalysts, the redox reaction, in the absence of a redox system in an aqueous dispersion, occurs only with the aid of ultra-violet light; on the contrary, it occurs with the aid of visible light if a sensitizer is present in the aqueous dispersion. In such case, the sensitizer is brought to a stable excited state by absorption of a visible light quantum. The excited sensitizer transfers one or more of its electrons to the conduction band of the semiconductor. The electron or electrons of the conduction band act as a reducer in the presence of the reduction catalyst, thus promoting the reduction reaction (for example the reduction of $H^+$ to $H_2$ in the case of the photodecomposition of water). In its turn the sensitizer now in the oxidized state, after having yielded the electron or electrons to the semiconductor, promotes the oxidation semi-reaction in the presence of the oxidation catalyst (for example the oxidation of $H_2O$ to $O_2$ in the case of the photodecomposition of water). The semiconducting properties of the utilized substances may be inherent or induced by a doping agent. The presence of the doping agent may also create colour centres in the semiconductor such as to permit the electronic excitation in the visible field.

The photodecomposition of $H_2S$ permits $H_2$ and polysulphide ions to be produced starting from a substance which is often a recovery substance and is highly polluting. The photodecomposition of $CO_2$ permits $CO_2$ to be transformed into useful organic substances, such as methanol. The photodecomposition of acetic acid is useful to accelerate complex and slow reactions which involve a decarboxylation step, such as for example the production of fuel gas by decomposition of organic wastes.

As the reduction catalyst it is possible to employ, for example, platinum, iridium, palladium, rhodium, osmium, silver or gold. Platinum is preferably used.

As the oxidation catalyst it is possible to employ, for example, oxides of ruthenium, platinum, iridium, manganese, iron, cobalt or tantalum. Ruthenium dioxide, $RuO_2$, is preferably used.

The size of the semiconductor particles generally ranges from 500 nm to 10 µm, more preferably from 1 µm to 2 µm. These sizes refer to the particles in dispersion, either in the aggregated form or in the form of individual particles. The oxidation and reduction catalysts present on the surface of the semiconductor particles must be in a finely divided state.

The amount of the reduction catalyst, referred to the semiconductor, is generally from 0.5 to 30% by weight, more preferably from 1 to 15% by weight.

The amount of the oxidation catalyst, referred to the semiconductor, is generally from 0.005% to 10% by weight, more preferably from 0.1 to 2% by weight.

In the case of doped semiconductors, the amount of doping agent, referred to the semiconductor, is generally from 0.001 to 10% by weight.

In the course of the photo-assisted redox reactions, the catalyst system consisting of the semiconductor and of the reduction and oxidation catalysts is maintained in the dispersed state, by stirring, in an aqueous solution. If the reaction which is required to occur is a reaction different from the photodecomposition of water, a reagent, e.g. $CO_2$, $Na_2S$ or a carboxylic acid, is also provided. The reaction is conducted, as required, under radiation of visible light or of ultraviolet light. Generally the reaction is conducted at room temperature; however, it is possible to operate at higher temperatures than the room temperature, for example at temperatures ranging from 40°C to the solution boiling temperature. The pH at which the reaction is conducted depends on the nature of the oxidation-reduction reaction and on the nature of the semiconductor; in particular, the reaction is to be conducted at a pH at which: (1) the electron in the conduction band proves to have a potential suitable for conducting the reduction semi-reaction; (2) the hole in the valence band or the oxidized sensitizer has a potential suitable for conducting the oxidation semi-reaction. For the photodecomposition of water, the pH may range, for example, from 4 to 5 when $SrTiO_3$ and $TiO_2$ doped with Cr and Nb are used as semiconductors. For the photodecomposition of $H_2S$ and the photoreduction of $CO_2$, the pH may range, for example from 12 to 14, when CdS is used as the semiconductor. For the photodecomposition of acetic acid, the pH may

range, for example, from 2 to 3, when $TiO_2$ doped with Cr and Nb is used as the semiconductor.

The concentration of the semiconductor in the dispersion is generally in the range of from 10 mg/l to 10 g/l, more preferably from 50 mg/l to 1 g/l.

Although the redox reaction can take place with visible light in the presence of the catalyst only, if the catalyst is coloured, or in the presence only of the catalyst and of a sensitizer, if the catalyst is uncoloured, it is possible to use complexer redox systems, i.e. systems containing other redox components, such as sensitizers, electronic relays and sacrificial substances (i.e. substances which undergo an oxidation semi-reaction or a reduction semi-reaction and therefore become consumed during the whole redox reaction).

In the case, for example, of the photodecomposition of water it is possible to use, with the coloured catalysts, the following systems with the aid of visible light:

(1) the catalyst alone;

(2) the catalyst and a sensitizer;

(3) the catalyst, a sensitizer and an electronic relay;

(4) the catalyst and a sacrificial substance;

(5) the catalyst, a sensitizer and a sacrificial substance;

(6) the catalyst, a sensitizer, an electronic relay and a sacrificial substance.

In the case of the photodecomposition of water, it is possible to use, with the uncoloured catalysts, the following systems:

(1) the catalyst alone, with ultra-violet light;

(2) the catalyst and a sensitizer, with visible light;

(3) the catalyst, a sensitizer and an electronic relay, with visible light;

(4) the catalyst and a sacrificial substance, with ultra-violet light;

(5) the catalyst, a sensitizer and a sacrificial substance, with visible light;

(6) the catalyst, a sensitizer, an electronic relay and a sacrificial substance, with visible light.

As sensitizers it is possible to use, for example, ruthenium trisbipyridyl or rhodamine B.

As electronic relay it is possible to employ, for example, methylviologen (N,N' - dimethyldipyridine).

As sacrificial substances for the oxidation semi-reaction, it is possible to employ, for example, EDTA (ethylene-diamine-tetra-acetic acid) or saccharose.

The concentration of the sensitizer in the aqueous dispersion ranges for example from 1 to $2.10^{-4}$ mole/liter, in the case of ruthenium trisbipyridyl. The concentration of the electronic relay is, for example, equal to $5.10^{-3}$ mole/liter in the case of methylviologen. The concentration of the sacrificial substance is, for example, 0.1 mole/liter.

The reduction and oxidation catalysts existing on the surface of the semiconductor particles are supposed to be in the form of sites which cover only a portion of the particles' surface. The semiconductors are prepared according to known methods, taking care to select modalities which are capable of securing the obtainment of the compound in a sufficiently subdivided form. In the case of doped semiconductors, the doping agent may be introduced during the preparation step of the semiconductor starting from the reagents thereof, so that it may be uniformly incorporated into the mass of the individual semiconductor particles. The doping agent may also be added during a successive calcining step.

The oxidation catalyst is then applied onto the surface of the semiconductor particles by means of conventional reactions for preparing the relevant compound, and operating with such modalities as to obtain the compound in a finely divided form. To apply the reduction catalyst onto the semiconductor surface, the same criteria are followed. A possible method of applying the reduction catalyst comprises preparing a very finely divided dispersion of the catalyst in water and in bringing such aqueous dispersion into contact, under stirring, with the semiconductor particles coated with the oxidation catalyst. Another method of applying the reduction catalyst comprises reducing one of its watersoluble compounds in the presence of an aqueous dispersion of semiconductor particles coated with the oxidation catalyst.

The invention will be further described with reference to the following illustrative Examples.

Example 1

This Example relates to the preparation of a catalyst consisting of In-doped CdS containing on its surface $RuO_2$ and Pt, as well as to the utilization thereof in the photodecomposition of water.

92.7 g of $CdSO_4$ were dissolved in distilled water and additioned with 1 g of In $(NO_3)_3.5H_2O$. To the resulting solution maintained at a constant temperature of 60°C, an aqueous solution of $Na_2S$ was added, maintaining the pH at a constant value of 3.8 by addition of an aqueous solution of $H_2SO_4$. At the conclusion of the precipitation, further $Na_2S$ was added until the pH value was adjusted to 6; the product was then aged for 30 minutes, always at a temperature of 60°C.

The product was filtered, washed with $H_2O$ and successively with ethanol, and then dried under vacuum at a temperature of 40°C.

A portion of the resulting product was calcined in a closed pipe at 400°C for 2 hours in the presence of S, to promote the doping of CdS with InS.

1 g of this product was dispersed by means of ultra-audible vibrations in distilled water; 1 ml of a solution of 0.2 g of $RuCl_3$ in 100 ml of $H_2O$ was added to the dispersion. It was observed that the dispersion was flocculated and the overfloating substance was colourless.

The resulting product was dried under vacuum (about 26665 Pa), in a slight air flow, at a temperature of 100°C overnight.

The CdS particles containing $RuO_2$ on their surfaces (0.1% by weight) were dispersed once

again in $H_2O$, at a concentration of 500 mg of CdS-In/liter.

An ultrafine Pt sol (having particle sizes of about 300 nm) was added to the dispersion in such amount as to have a Pt/CdS weight ratio equal to 1/12.5, obtaining the adsorption of the Pt particles on the CdS-In particles.

The dispersion was brought to a pH of 4.7 with an acetic acid-sodium acetate mixture and was additioned with EDTA (used as a sacrificial compound) at a concentration of 0.1 mole/liter.

The dispersion was introduced into a flask having two optically flat faces and, after stripping with $N_2$, it was illuminated by a 450 W Xenon lamp.

From the spectrum of the radiations emitted by the lamp, the infrared radiations were eliminated by means of a 15-cm cell filled with $H_2O$, and the ultra-violet radiations by means of an intercepting filter which eliminated the radiations below 400 nm. The system so composed produced hydrogen at a rate of about 70 ml/h per liter of solution.

Example 2

This Example relates to the preparation of a catalyst consisting of CdS containing $RuO_2$ and Pt on its surface, and to the use thereof in the photodecomposition of $H_2S$.

92.7 g of $CdSO_4$ were dissolved in distilled water at a pH of 3.8. To the resulting solution, kept at a constant temperature of 60°C, an aqueous solution of $Na_2S$ was added, maintaining the pH value constantly at 3.8 by addition of an aqueous solution of sulphuric acid.

On completion of the precipitation, $Na_2S$ in excess was added until a pH of 6 was attained; the product was then aged for 30 minutes at a temperature of 60°C. The product was filtered and washed with water and then with ethanol and was dried under vacuum at a temperature of about 40°C.

The resulting product was calcined in a muffle furnace, in air, at a temperature of 550°C for 15 minutes.

After cooling, 1 g of the sample was dispersed in $H_2O$ by means of ultra-audible vibrations and was additioned with 1 ml of a $RuCl_3$ solution (0.2 g in 100 ml), after which the product was dried at 100°C under vacuum (about 26665 Pa, with a slight air flow) overnight.

The product was further calcined in a furnace at about 300°C for 1 hour. It was then dispersed in distilled water at a concentration of 500 mg/l and was additioned with colloidal Pt (about 300 nm) in a weight ratio Pt/CdS=1:12.5.

The dispersion was brought at a pH of 14 by means of NaOH and was additioned with $Na_2S$ until a concentration of 0.1 mole/l was reached; then it was illuminated by the visible fraction of the radiation emitted by a 450 W Xenon lamp.

In this case, the photodecomposition reaction of $H_2S$ occurred in the solution, with generation of hydrogen at a rate of 200 ml/h per liter of solution and polysulphide ions. The presence of polysulphide was revealed as follows: the catalyst was filtered and the solution was acidified; colloidal S was generated by the decomposition of the polysulphide.

Example 3

This Example relates to the preparation of a catalyst consisting of $TiO_2$ doped with Cr and Nb, containing $RuO_2$ and Pt on its surface, as well as to the use thereof in the photodecomposition of water.

A sulphuric solution of $TiOSO_4$ and $Fe^{2+}$ containing 0.15% of Nb calculated as $Nb_2O_5$ on $TiO_2$ (coming from the sulphuric digestion of ilmenite) was hydrolyzed by heating to 95—100°C and dilution with $H_2O$ in a ratio of 20 parts by volume of water to 80 parts of sulphuric solution. The metatitanic acid slurry so obtained was filtered and washed in order to remove the soluble impurities.

The metatitanic acid amount containing 300 g of $TiO_2$ was additioned with an aqueous solution containing 0.42 g of potassium bichromate and was then calcined in a laboratory rotary furnace, whereby it was brought from room temperature to 750°C in 4 hours. The resulting product containing 0.05% of chromium exhibited a pale yellow shade, as the Cr ions had generated colour centres in the $TiO_2$ crystals; this product, when acting as a carrier for the $RuO_2$ and Pt redox catalysts, was capable of decomposing water by radiation with visible light.

In actual fact, a dispersion containing 500 mg/l of the product described in this Example, treated with 0.1% of $RuO_2$ and in the presence of 40 mg/l of a Pt sol, generated, at a pH of 4.7, hydrogen at an approximate rate of 1 ml/h per liter of solution in the absence of sensitizers.

Example 4

This Example relates to the preparation of a catalyst consisting of $SrTiO_3$ containing $RuO_2$ and Pt on its surface, as well as to the use thereof in the photodecomposition of water.

To a metatitanic acid slurry prepared as described in Example 3, containing about 300 g of $TiO_2$, there was admixed solid $SrCO_3$ in an equimolecular amount in respect of $TiO_2$.

The slurry was then calcined in a laboratory rotary furnace so bringing it from room temperature to 1,150°C in 9 hours. The resulting product, analyzed by X-ray diffraction, was composed essentially of $SrTiO_3$, containing a very low percentage of rutile $TiO_2$ and traces of anatase $TiO_2$.

The strontium titanate so obtained, consisting of particles with sizes of about 1 μm, was dispersed in bidistilled water by means of ultra-audible vibrations, and then additioned with a $RuCl_3$ solution containing 0.1% by weight of Ru calculated as $RuO_2$ in respect of strontium titanate. The slurry was dried in an oven under vacuum (26665 Pa, with a slight air flow) overnight at 100°C. A portion of the resulting product was dispersed in distilled $H_2O$ at a

concentration of 500 mg/l, and then additioned with a Pt sol in such an amount as to obtain a $Pt/SrTiO_3$ ratio by weight equal to 1:12.5.

After addition of a sensitizer and of an electronic relay, in the presence of the sacrificial substance EDTA, the system consisted of:

| | |
|---|---|
| $SrTiO_3/RuO_2$ | 500 mg/l |
| Pt | 40 mg/l |
| Ruthenium trisbipyridyl | $1.10^{-4}$mole/l |
| Methylviologen | $5.10^{-3}$mole/l |
| EDTA | $5.10^{-2}$mole/l |

The dispersion was irradiated with the visible fraction of the light emitted by a 450 W Xenon lamp: by radiation, hydrogen was generated at a rate of 160 ml/h per liter of solution.

Example 5

This Example relates to the use of a catalyst consisting of CdS containing $RuO_2$ and Pt on its surface in the photo-reduction of $CO_2$.

In the test described in Example 2, if the reaction is conducted in a $CO_2$ stream, the hydrogen yield drastically decreases down to about 80 ml/h per liter of solution; the yield decrease is attributable to a reaction occurring concurrently with the evolvement of hydrogen and involving $CO_2$. In fact, gas chromatographic analysis carried out on the filtrate of the irradiated solution revealed the presence of a peak corresponding to the retention time of methanol, which is a reduction product of $CO_2$.

Example 6

This Example relates to the preparation of a catalyst consisting of cadmium sulphoselenide containing $RuO_2$ and Pt on its surface, as well as to the utilization thereof in the photodecomposition of water.

92.7 g of $CdSO_4$ were dissolved in distilled water until a solution having a concentration of 130 g/liter was obtained. The solution was heated to 70°C. To this solution there was added, dropwise at a rate of 100 ml every 6—7 minutes, a solution of $Na_2S$ in a concentration of 75 g $Na_2S$/liter containing Se metal in an amount equal to 10% by weight calculated on the basis of $Na_2S$.

The added amount of $Na_2S$ solution was such as to cause $Cd^{++}$ to completely precipitate in the form of CdS. The precipitate contained finely subdivided Se. An excess of $Na_2S$ solution containing Se was added in order to bring the pH value to 6—6.5. The precipitate was cooled, filtered, washed with distilled water and dried at 110°C.

The dried product was crushed in a mortar and calcined in a nitrogen atmosphere at 500°C for 30 minutes. The product so obtained was a solid solution of formula

$$CdS_{0.8}Se_{0.2}$$

The product, once again ground in a mechanical mortar, was dispersed in water and additioned with a $RuCl_3$ solution in such an amount as to obtain 0.1% by weight of $RuO_2$ referred to cadmium sulphoselenide.

The dispersion was evaporated to dryness at 110°C under reduced pressure (33331 Pa), with a slight air flow.

Pt in an amount of 8% by weight referred to cadmium sulphoselenide was added to the product, following the procedure described in Example 1. A water dispersion of the product in a concentration of 500 mg/l was irradiated as in Example 1.

9 ml/h of $H_2$ per liter of dispersion was thus obtained.

Example 7

A sample of $TiO_2$ doped with Cr and Nb was prepared as in Example 3, except that the amount of supported $RuO_2$ was 0.2% and the amount of Pt was 4% (calculated as % by weight on $TiO_2$). The sample was dispersed in a solution of 6 ml of 100% acetic acid in 19 ml of water. The irradiation of the dispersion permitted the photodecarboxylation reaction of acetic acid along with the photodecomposition reaction of water and with other secondary reactions, such as the complete reduction of acetic acid.

Analysis of the gas evolved by the reaction, expressed as generation velocity of the various components (in micro-liters per 25 ml of solution per hour), was as follows: $CH_4$: 63; $CO_2$: 24; $H_2$: 50; ethane: traces.

**Claims**

1. A catalyst for photo-assisted oxidation-reduction reactions selected from the photodecomposition of water, the photodecomposition of $H_2S$, the photoreduction of $CO_2$ and the photodecarboxylation of carboxylic acids, characterized in that it comprises colloidal particles of a semiconductor which contain on their surface a reduction catalyst and an oxidation catalyst; that the semiconductor has an energy difference between the valence band and the conduction band such as to permit the hole-electron separation by absorption of visible light; and that the conduction electron has such a reducing potential and the hole in the valence band has such an oxidizing potential as to allow, in the presence of the aforesaid reduction and oxidation catalysts, the accomplishment of the redox reaction; in the case of the photodecomposition of water, the semiconductor being selected from $TiO_2$ doped with Mn, Cr or Cr and Nb; CdS doped with In or Ga; $SrTiO_3$ doped with Cr or Mn; gallium phosphide; and cadmium sulphoselenide; and in the case of the other said photodecomposition reactions the semiconductor being selected from the abovesaid compounds and CdS.

2. A catalyst for photo-assisted oxidiation-reduction reactions selected from the photo-

decomposition of water, the photodecomposition of $H_2S$, the photoreduction of $CO_2$ and the photodecarboxylation of carboxylic acids, characterized in that it comprises colloidal particles of a semiconductor which contain on their surface a reduction catalyst and an oxidation catalyst; that the semiconductor has an energy difference between the valence band and the conduction band such as not to permit the hole-electron separation by absorption of visible light; that the semiconductor has such a conduction band that, after having received one or more electrons from a sensitizer excited by absorption of visible light, said electron or electrons has or have such a reducing potential as to promote a reduction semi-reaction in the presence of the reduction catalyst, while the oxidized sensitizer promotes an oxidation semi-reaction in the presence of the oxidation catalyst; in the case of the photodecomposition of water the semiconductor being $SrTiO_3$ or $Nb_2O_5$; and in the case of the other said photodecomposition reactions the semiconductor being selected from the abovesaid compounds and $TiO_2$ doped with Nb.

3. A catalyst as claimed in claim 1 or 2, characterized in that the reduction catalyst is selected from platinum, iridium, palladium, rhodium, osmium, silver and gold.

4. A catalyst as claimed in any of claims 1 to 3, characterized in that the oxidation catalyst is selected from oxides of ruthenium, platinum, iridium, manganese, iron, cobalt and tantalum.

5. A catalyst as claimed in claim 4, characterized in that the oxidation catalyst is ruthenium dioxide.

6. A catalyst as claimed in any of claims 1 to 5, characterized in that the size of the semiconductor particles ranges from 500 nm to 10 µm.

7. A catalyst as claimed in claim 6, characterized in that the size of the semiconductor particles ranges from 1 µm to 2 µm.

8. A catalyst as claimed in any of claims 1 to 7, characterized in that the amount of reduction catalyst, referred to the semiconductor, is from 0.5 to 30% by weight.

9. A catalyst as claimed in claim 8, characterized in that the amount of reduction catalyst, referred to the semiconductor, is from 1 to 15% by weight.

10. A catalyst as claimed in any of claims 1 to 9, characterized in that the amount of oxidation catalyst, referred to the semiconductor, is from 0.005% to 10% by weight.

11. A catalyst as claimed in claim 10, characterized in that the amount of oxidation catalyst, referred to the semiconductor, is from 0.1 to 2% by weight.

**Patentansprüche**

1. Katalysator für photochemisch unterstützte Redoxreaktionen, ausgewählt unter der Photozersetzung von Wasser, der Photozersetzung von $H_2S$, der Photoreduktion von $CO_2$ und der Photodecarboxylierung von Carbonsäuren, dadurch gekennzeichnet, dass er kolloidale Teilchen eines Halbleiters umfasst, die auf ihrer Oberfläche einen Reduktionskatalysator und einen Oxidationskatalysator enthalten; dass der Halbleiter eine Energiedifferenz zwischen dem Valenzband und dem Leitfähigkeitsband aufweist, welche die Loch - Elektronen - Trennung durch Absorption von sichtbarem Licht ermöglicht; und dass das Leitfähigkeitselektron ein solches Reduktionspotential und das Loch in dem Valenzband ein solches Oxidationspotential aufweisen, dass die Redoxreaktion in Gegenwart der genannten Reduktions- und Oxidationskatalysatoren stattfinden kann; wobei im Falle der Photozersetzung von Wasser der Halbleiter ausgewählt ist unter $TiO_2$, dotiert mit Mn, Cr oder Cr und Nb; CdS, dotiert mit In oder Ga; $SrTiO_3$, dotiert mit Cr oder Mn; Galliumphosphid; und Cadmiumsulfoselenid; und im Falle der anderen Photozersetzungsreaktionen der Halbleiter ausgewählt ist unter den oben genannten Verbindungen und CdS.

2. Katalysator für photochemisch unterstützte Redoxreaktionen, ausgewählt unter der Photozersetzung von Wasser, der Photozersetzung von $H_2S$, der Photoreduktion von $CO_2$ und der Photodecarboxylierung von Carbonsäuren, dadurch gekennzeichnet, dass er kolloidale Teilchen eines Halbleiters umfasst, die auf ihrer Oberfläche einen Reduktionskatalysator und einen Oxidationskatalysator enthalten; dass der Halbleiter eine Energiedifferenz zwischen dem Valenzband und dem Leitfähigkeitsband aufweist, welche die Loch - Elektronen - Trennung durch Absorption von sichtbarem Licht ermöglicht; dass der Halbleiter ein solches Leitfähigkeitsband hat, dass nach dem Empfang eines oder mehrere Elektronen von einem Sensibilisator, der durch Absorption von sichtbarem Licht angeregt worden ist, das Elektron oder die Elektronen ein solches Reduktionspotential hat bzw. haben, dass einen Reduktions-Halbreaktion in Gegenwart des Reduktionskatalysators gefördert wird, während der oxidierte Sensibilisator eine Oxidations-Halbreaktion in Gegenwart des Oxidationskatalysators fördert; wobei im Falle der Photozersetzung von Wasser der Halbleiter $SrTiO_3$ oder $Nb_2O_5$ ist; und im Falle der anderen Photozersetzungsreaktionen der Halbleiter ausgewählt ist unter den oben genannten Verbindungen und $TiO_2$, dotiert mit Nb.

3. Katalysator nach Anspruch 1 oder 2, dadurch gekennzeichnet, dass der Reduktionskatalysator ausgewählt ist unter Platin, Iridium, Palladium, Rhodium, Osmium, Silber und Gold.

4. Katalysator nach irgendeinem der Ansprüche 1 bis 3, dadurch gekennzeichnet, dass der Oxidationskatalysator ausgewählt ist unter Oxiden von Ruthenium, Platin, Iridium, Mangan, Eisen, Kobalt und Tantal.

5. Katalysator nach Anspruch 4, dadurch gekennzeichnet, dass der Oxidationskatalysator Rutheniumdioxid ist.

6. Katalysator nach irgendeinem der Ansprüche 1 bis 5, dadurch gekennzeichnet, dass die Halbleiterteilchen eine Grösse im Bereich von 500 nm bis 10 µm haben.

7. Katalysator nach Anspruch 6, dadurch gekennzeichnet, dass die Halbleiterteilchen eine Grösse im Bereich von 1 µm bis 2 µm haben.

8. Katalysator nach irgendeinem der Ansprüche 1 bis 7, dadurch gekennzeichnet, dass die Menge des Reduktionskatalysators, bezogen auf den Halbleiter, 0,5 bis 30 Gewichtsprozent beträgt.

9. Katalysator nach Anspruch 8, dadurch gekennzeichnet, dass die Menge des Reduktionskatalysators, bezogen auf den Halbleiter, 1 bis 15 Gewichtsprozent beträgt.

10. Katalysator nach irgendeinem der Ansprüche 1 bis 9, dadurch gekennzeichnet, dass die Menge des Oxidationskatalysators, bezogen auf den Halbleiter, 0,005 bis 10 Gewichtsprozent beträgt.

11. Katalysator nach Anspruch 10, dadurch gekennzeichnet, dass die Menge des Oxidationskatalysators, bezogen auf den Halbleiter, 0,1 bis 2 Gewichtsprozent beträgt.

## Revendications

1. Un catalyseur de réactions d'oxydoréduction photo-assistées choisies parmi la photodécomposition de l'eau, la photodécomposition de $H_2S$, la photoréduction de $CO_2$ et la photodécarboxylation des acides carboxyliques, caractérisé en ce qu'il comprend des particules colloïdales d'un semi-conducteur qui contiennent à leur surface un catalyseur de réduction et un catalyseur d'oxydation, en ce que le semi-conducteur présente une différence d'énergie entre la bande de valence et la bande de conduction telle qu'elle permette la séparation électron-trou par absorption de lumière visible et en ce que l'électron de conduction présente un potentiel de réduction et le trou ou lacune dans la bande de valence un potentiel d'oxydation tels que l'on puisse obtenir en présence des catalyseurs d'oxydoréduction précités l'accomplissement de la réaction rédox; dans le cas de la photodécomposition de l'eau, le semi-conducteur étant choisi parmi $TiO_2$ dopé au Mn, Cr ou Cr et Nb; CdS dopé à In ou Ga; $SrTiO_3$ dopé au Cr ou Mn; phosphure de gallium; et sulfoséléniure de cadmium; et dans le cas des autres réactions de photodécomposition, le semi-conducteur est choisi parmi les composés précités et CdS.

2. Un catalyseur de réactions d'oxydoréduction photo-assistées choisies parmi la photodécomposition de l'eau, la photodécomposition de $H_2S$, la photoréduction de $CO_2$ et la photodécarboxylation des acides carboxyliques, caractérisé en ce qu'il comprend des particules colloïdales de semi-conducteur contenant à leur surface un catalyseur de réduction et un catalyseur de réduction, en ce que le semi-conducteur présente une différence d'énergie entre la bande de valence et la bande de conduction telle qu'elle ne permet pas la séparation électron-trou par absorption de lumière visible, en ce que le semi-conducteur présente une bande de conduction telle qu'après avoir accepté un ou plusieurs électrons d'un sensibilisateur excité par absorption de lumière visible, le ou lesdits électrons présentent un potentiel de réduction de nature à produire une semi-réaction de réduction en présence du catalyseur de réduction tandis que le sensibilisateur oxydé produit une semi-réaction d'oxydation en présence du catalyseur d'oxydation, en ce que dans le cas de la photodécomposition de l'eau, le semi-conducteur est $SrTiO_3$ ou $Nb_2O_5$; en ce que dans le cas des autres réactions de photodécomposition, le semi-conducteur est choisi parmi les composés précités et $TiO_2$ dopé au Nb.

3. Un catalyseur selon la revendication 1 ou 2, caractérisé en ce que le catalyseur de réduction est choisi parmi platine, iridium, palladium, rhodium, osmium, argent et or.

4. Un catalyseur selon l'une quelconque des revendications 1 à 3, caractérisé en ce que le catalyseur d'oxydation est choisi parmi les oxydes de ruthénium, platine, iridium, manganèse, fer, cobalt et tantale.

5. Un catalyseur selon la revendication 4, caractérisé en ce que le catalyseur d'oxydation est le dioxyde de ruthénium.

6. Un catalyseur selon l'une quelconque des revendications 1 à 5, caractérisé en ce que la dimension des particules du semi-conducteur est comprise entre 500 nm et 10 µm.

7. Un catalyseur selon la revendication 6, caractérisé en ce que la dimension des particules du semi-conducteur est comprise entre 1 µm et 2 µm.

8. Un catalyseur selon l'une quelconque des revendications 1 à 7, caractérisé en ce que la quantité de catalyseur de réduction par rapport au semi-conducteur est comprise entre 0,5 et 30% en poids.

9. Un catalyseur selon la revendication 8, caractérisé en ce que la quantité de catalyseur de réduction par rapport au semi-conducteur est comprise entre 1 et 15% en poids.

10. Un catalyseur selon l'une quelconque des revendications 1 à 9, caractérisé en ce que la quantité de catalyseur d'oxydation par rapport au semi-conducteur est comprise entre 0,05 et 10% en poids.

11. Un catalyseur selon la revendication 10, caractérisé en ce que la quantité du catalyseur d'oxydation par rapport au semi-conducteur est comprise entre 0,1 et 2% en poids.